(19) Europäisches Patentamt
European Patent Office
Office européen des brevets

(11) **EP 2 538 422 A1**

(12) **EUROPEAN PATENT APPLICATION**

(43) Date of publication:
**26.12.2012 Bulletin 2012/52**

(51) Int Cl.:
**H01G 9/20** $^{(2006.01)}$

(21) Application number: **12173177.2**

(22) Date of filing: **22.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.06.2011 IT MI20111162**

(71) Applicants:
• **CONSIGLIO NAZIONALE DELLE RICERCHE 00185 Roma (IT)**
• **Universita' degli studi di Brescia 25121 Brescia (IT)**

(72) Inventors:
• **Vomiero, Alberto 25133 Brescia (IT)**
• **Galstyan, Vardan 25121 Brescia (IT)**
• **Sberveglieri, Giorgio 25121 Brescia (IT)**

(74) Representative: **Acco, Stefania et al Perani & Partners Piazza San Babila, 5 20122 Milano (IT)**

(54) **Dye-sensitized solar cell and fabrication process thereof**

(57)    A dye-sensitized photovoltaic cell comprising: a first substrate of polymeric material having a top surface; an anode, arranged on the first substrate; an active photovoltaic layer arranged on the anode, and comprising a nanostructure including an arrangement of titanium dioxide nanotubes, a photosensitive material in contact with the nanostructure and a redox electrolyte, and a cathode arranged on the active photovoltaic layer, wherein the redox electrolyte is placed between the anode and the cathode.

A process of making a dye-sensitized photovoltaic cell is also described.

Figure 1

## Description

FIELD OF THE INVENTION

The present invention relates to a dye-sensitized photovoltaic cell and a relevant process of manufacturing a dye-sensitized photovoltaic cell. In a particular aspect, the present invention discloses a flexible photovoltaic cell and a process of making it.

BACKGROUND ART

For the last decades, attention has been focused on the investigation of titanium dioxide nanostructures ($TiO_2$), such as $TiO_2$ nanotube arrays, due to their properties, which are relevant in applications such as gas sensors, photovoltaic cells, biomedical materials and photocatalysts.

$TiO_2$ nanotubes may be manufactured with various methods, including anodic oxidation of titanium films or sheets.

The paper "Fabrication of TiO2 Nanotubes Thin Films and Their Gas Sensing Properties", by Yonxiang Li et al., Journal of Sensors, vol. 2009 (2009), Paper ID 402174, provides an overview of the manufacturing processes and growth mechanisms of titanium/titania nanotubes, prepared with the anodization proocess.

Yuxin Tang et al. in "Preparation and Characterization of TiO2 Nanotube Arrays via Anodization of Titanium Films Deposited on FTO Conducting Glass at Room Temperature", Acta Physico-Chimica Sinica, vol. 24(12), pp. 2191-2197, describes $TiO_2$ nanotube arrays prepared on conductive fluorine doped tin oxide (FTO) by electrochemical anodization of pure titanium films deposited by radio frequency magnetron sputtering at room temperature. Nanotubes having a length of 1100 nm and a pore diameter of 75 nm have been prepared by potentiostatic anodization in a 0.5 wt% $NH_4F$/glycerol solution. Dye-sensitized solar cells have raised considerable interest as a possible low-cost alternative to traditional cells.

G.K. Mor et al. in "A review on highly ordered, vertically oriented TiO2 nanotube arrays: Fabrication, material properties, and solar energy applications", published in Solar Energy and Materials & Solar Cells 90 (2006), pp. 2011-2075, analyse the application of $TiO_2$ nanotube arrays in heterojunction dye-sensitized solar cells. The authors describe the geometry of a solar cell that comprises a nanotube array formed by anodization of a Ti film on a FTO-coated glass.

O.K. Varghese et al. in "Long vertically aligned titania nanotubes on transparent conducting oxide for highly efficient solar cells", Nature Nanotechnology, vol. 4 (2009), pp. 592-597, note that there are three main challenges in the manufacture of long nanotube array films, which exhibit high optical transparency and superior electric properties, to obtain efficient solar cells: (1) the formation of uniform titanium films with a thickness of tens of micrometers on FTO glass and having enough adhesion to withstand stresses associated with the anodization; (II) the anodization of these thick films until a uniform optical transparency is achieved, and (III) the manufacture of nanotubes using organic nonaqueous fluorine-containing electrolytes, without debris formation or clumping of nanotubes. The authors report the fabrication of transparent titania nanotube films on FTO glass substrates with lengths between 0.3 and 33.0 $\mu$m using a novel electrochemistry approach. The authors note that in dye-sensitized solar cells, the active layers consisting of nanoporous $TiO_2$ are as thick as a few tens of micrometers and are in principle suited for flexible applications. Nevertheless, the authors state that typical plastic substrates do not withstand the process temperatures that are typically used for $TiO_2$ nanoparticle sintering. M. Dürr et al. in "Low-temperature fabrication of dye-sensitized solar cells by transfer of composite porous layers", Nature Materials, vol. 4 (2005), pp. 607-611, describe a process of fabrication of dye-sensitized solar cells by transfer of composite porous layers.

Particularly, a composite porous layer consisting of solid nanoparticles (spherical particles in a first portion of the layer and rodlike particles in a second portion of the layer) is sintered on a glass substrate coated with an Au film and is then removed from the substrate by dissolving the metal layer. Subsequently, the nanoporous layer is transferred to a flexible plastic (i.e. PET) substrate or to a glass substrate. In both cases, the transfer substrate is already coated with a transparent conductive oxide layer (TCO). A thin adhesion layer between the transfer substrate and the porous layer has been deemed to be required for mechanical stability.

SUMMARY OF THE INVENTION

The Applicant has observed that, while the process proposed by M. Dürr and co-authors provides a dye-sensitized solar cell for flexible applications, that process is relatively complex and cannot ensure proper adhesion of the active photovoltaic layer to the substrate.

The Applicant has realized that a solar cell can be directly fabricated on a substrate of polymeric material, without using relatively complex techniques such as lift-off of the active photovoltaic layer from the original substrate.

The Applicant has conceived a dye-sensitized photovoltaic cell that can be fabricated on a polymeric substrate using a relatively simple, low-cost process.

In one aspect, the present invention relates to a dye-sensitized photovoltaic cell, comprising: a first substrate of polymeric material having a top surface; an anode, arranged on the first substrate; an active photovoltaic layer arranged on the anode, and comprising a nanostructure including an array of titanium dioxide nanotubes, a photosensitive material in contact with the nanostructure and a redox electrolyte, and a cathode arranged on the active photovoltaic layer, wherein the redox electrolyte is placed between the anode and the cathode.

The active photovoltaic layer of the photovoltaic cell comprises the nanostructure, the photosensitive dye and the redox electrolyte.

Due to their ordered geometry, the nanotubes afford electronic transfer in the cell along much shorter rectilinear paths than in unordered nanocrystalline aggregates, such as an aggregate of solid nanoparticles having a polycrystalline structure. This strongly reduces recombination processes, which might degrade photoconversion efficiency in sensitized solar cells.

Preferably, the photovoltaic cell further comprises a second substrate of polymeric material and arranged on the cathode. Preferably, the second substrate is made of a transparent polymeric material.

Preferably, the first substrate is a flexible film of polymeric material.

Preferably, the second substrate is a flexible film of polymeric material.

Preferably, the cathode comprises a layer of conductive transparent material.

Preferably, the first substrate is made of an imide-based or ester-based polymeric material. In certain preferred embodiments, the first substrate is made of polyimide.

In certain preferred embodiments, the nanostructure essentially consists of a nanotube array. Herein, a nanostructure essentially consisting of a nanotube array is not intended to exclude the presence of $TiO_2$ nanostructures other than nanotubes, in much smaller amounts. Nevertheless, the presence of these structures does not alter the essential nature of the electronic transport towards the anode, which is mainly due to nanotubes.

In certain preferred embodiments, the nanostructure is obtained by a process of anodization of a titanium primary layer, directly grown on a substrate of polymeric material. In one embodiment, the crystalline structure has crystalline domain with mutual random orientation.

In certain preferred embodiments, the anode comprises a titanium residual layer which is directly formed on the top surface of the first substrate of polymeric material and the nanostructure including a titanium dioxide nanotube array is arranged on and in contact with the titanium residual layer. Preferably, the anode is made of the titanium residual layer. Preferably, the titanium residual layer has a thickness that ranges from 50 nm to 200 nm.

Preferably, the nanotube array has a crystalline structure.

In some embodiments, the photovoltaic cell comprises: a first substrate of polymeric material having a top surface; an anode, arranged on the first substrate; an active photovoltaic layer arranged on the anode, and comprising a nanostructure including an arrangement of titanium dioxide nanotubes, a photosensitive material in contact with the nanostructure and a redox electrolyte, and a cathode arranged on the active photovoltaic layer wherein, in the photovoltaic cell the redox electrolyte is placed between the anode and the cathode, and the anode comprises a first conductive transparent layer. Preferably, in such embodiments, the nanostructure contacts the layer of transparent conductive oxide. In certain embodiments, the anode is made of a transparent conductive layer. Preferably, the first transparent conductive layer has a top surface, and the nanostructure is directly formed on the top surface of the transparent conductive layer. Preferably, the first transparent conductive layer has a sheet resistance ranging from 8 to 20 Ω/.

Preferably, the nanotube array has a crystalline structure.

Preferably, the cathode comprises a second conductive layer. Preferably, the first substrate is made of a transparent polymeric material. In certain embodiments, the first substrate is made of polyimide. Preferably, the first substrate is a flexible film of polymeric material. Preferably, the photovoltaic cell further comprises a second substrate of polymeric material and arranged on the cathode. Preferably, the second substrate is made of a transparent polymeric material.

Preferably, the second substrate is a flexible film of polymeric material.

In a further aspect, the present invention relates to a process of manufacturing a dye-sensitized photovoltaic cell, which comprises: providing a first substrate of polymeric material having a top surface; forming a titanium primary layer on the first substrate; oxidizing the titanium primary layer to form a nanostructure comprising a titanium dioxide nanotube array, the nanostructure being arranged on a first conductive layer; exposing the nanostructure to contact with a photosensitive material; placing a second conductive layer on the nanostructure, and placing a redox electrolyte between the first and second conductive layers.

According to certain preferred embodiments, the present invention relates to a process of manufacturing a dye-sensitized photovoltaic cell, which comprises: providing a first substrate of polymeric material having a top surface; forming a titanium primary layer directly on the top surface of the first substrate, where the primary layer has a thickness; incompletely oxidizing the titanium primary layer through the thickness of the primary layer to form a nanostructure comprising a titanium dioxide nanotube array on an unoxidized titanium residual layer, the titanium residual layer being placed between the first substrate and the nanostructure; exposing the nanostructure to contact with a photosensitive material; placing a conductive layer on the nanostructure, and placing a redox electrolyte between the titanium residual layer and the conductive layer.

In certain embodiments, the titanium primary layer has a thickness that ranges from 1 $\mu$m to 15 $\mu$m.

Preferably, placing a redox electrolyte comprises filling the gap between the titanium residual layer and the conductive with a redox electrolyte. In one embodiment, the titanium residual layer acts as an anode for the solar cell and the conductive layer acts as a cathode or counter-electrode.

Preferably, the step of oxidizing is carried out by an anodization process.

Preferably, the step of incompletely oxidizing comprises performing anodization through a first thickness portion of the primary layer, having a smaller thickness than the primary layer, and stopping anodization such that a second thickness portion lying under the first portion, remains unoxidized and forms an unoxidized titanium metal residual layer.

After the formation of the primary layer, the primary layer has a free surface. Preferably, the process also comprises, after depositing the primary layer and prior to oxidizing the primary layer, covering the surface of the primary layer with a protective layer comprising an alcohol-based ink. Preferably, the protective layer has a thickness that ranges from 200 nm to 1000 nm.

Preferably, the process also comprises, after anodizing the primary layer, crystallizing the nanostructure.

Preferably, the step of forming a titanium primary layer comprises depositing a titanium primary layer on the top surface of the first substrate of polymeric coating. Preferably, the step of depositing a titanium primary layer is carried out by magnetron sputtering. Preferably, the step of anodizing the primary layer comprises dipping the titanium primary layer deposited on the first substrate into an electrolytic bath which comprises an organic solvent and a complexing agent containing fluoride ions, and providing a potential difference between a first and a second electrode, in which the first electrode comprises the titanium primary layer.

In certain further embodiments, the present invention relates to a process of manufacturing a dye-sensitized photovoltaic cell, which comprises: providing a first substrate of polymeric material having a top surface; forming a first conductive layer on the top surface of the substrate; forming a titanium primary layer on the first conductive layer, where the primary surface has a thickness; oxidizing the titanium primary layer through the thickness of the primary layer to form a nanostructure comprising a titanium dioxide nanotube array; exposing the nanostructure to contact with a photosensitive material; placing a second conductive layer on the nanostructure, and placing a redox electrolyte between the first conductive layer and the second conductive layer.

In certain embodiments, the titanium primary layer has a thickness that ranges from 1 $\mu$m to 15 $\mu$m.

Preferably, placing a redox electrolyte comprises filling the gap between the first conductive layer and the second conductive layer with a redox electrolyte. In one embodiment, the first conductive layer acts as an anode and the second conductive layer acts as a cathode or counter-electrode.

Preferably, the step of oxidizing is carried out by an anodization process.

Preferably, the step of anodizing comprises performing anodization through the thickness of the primary layer such that the nanotube array contacts the top surface of the first conductive layer.

After the formation of the titanium primary layer, the primary layer has a surface. Preferably, the process also comprises, after depositing the primary layer and prior to oxidizing the primary layer, covering the surface of the primary layer with a protective layer comprising an alcohol-based ink. Preferably, the protective layer has a thickness that ranges from 200 nm to 1000 nm.

Preferably, the first conductive layer is transparent. Preferably, the first substrate is made of a transparent polymeric material.

Preferably, the second conductive layer is transparent.

BRIEF DESCRIPTION OF THE FIGURES

Further characteristics and advantages of the invention will be apparent from the following detailed description, which is made with reference to non-limiting embodiments thereof, and to the accompanying figures, in which:

Figure 1 is a schematic cross sectional view of a photovoltaic cell according to one embodiment of the present invention.
Figure 2 is a schematic cross sectional view of a photovoltaic cell according to a further embodiment of the present invention.
Figures 3a-3c sequentially show (in schematic form) some steps of a photovoltaic cell manufacturing process according to one embodiment of the present invention.
Figure 4 is an image obtained by a Scanning Electron Microscope (SEM) which shows a side view of a nanotube array manufactured according to the present invention.

Figure 5 is an image obtained by a Scanning Electron Microscope (SEM) which shows a bottom plan view of a nanotube array of Figure 4.

Figure 6 is a chart that shows the exterior radius, $r_{ext}$, (full circles) and the internal radius, $r_{int}$, (empty circles), as measured from SEM images, of nanotube arrays as a function of the anodization voltage applied during the anodization process.

Figure 7 is an X-ray diffraction pattern (XRD) of a sample that consists of a structure formed of a Kapton® HN substrate, having a titanium primary layer deposited thereon, which is anodized and then heated to 350°C for 5 hours in the ambient atmosphere.

Figures 8a-8c sequentially show (in schematic form) some steps of a photovoltaic cell manufacturing process according to one embodiment of the present invention.

Figure 9 is a chart that shows the roughness factor of $TiO_2$ nanotubes having an exterior radius of 30 nm as a function of their length.

Figure 10 is a chart that shows experimental current density (j) - voltage (V) curves for different intensities of simulated solar radiation, i.e. 23, 50, 63 and 100 mW/cm$^2$, for a photovoltaic cell formed according to one embodiment of the present invention.

Figure 11 is a chart that shows, in the left y-axis, the open-circuit voltage ($V_{oc}$) and in the right y-axis the short-circuit current density ($j_{SC}$) of the photovoltaic cell of Figure 10, as a function of the simulated solar-radiation intensity.

Figure 12 is a chart that shows, in the left y-axis, the fill factor (FF) and in the right y-axis the efficiency ($\eta$) of the photovoltaic cell of Figure 10, as a function of the simulated solar-radiation intensity.

## DETAILED DESCRIPTION

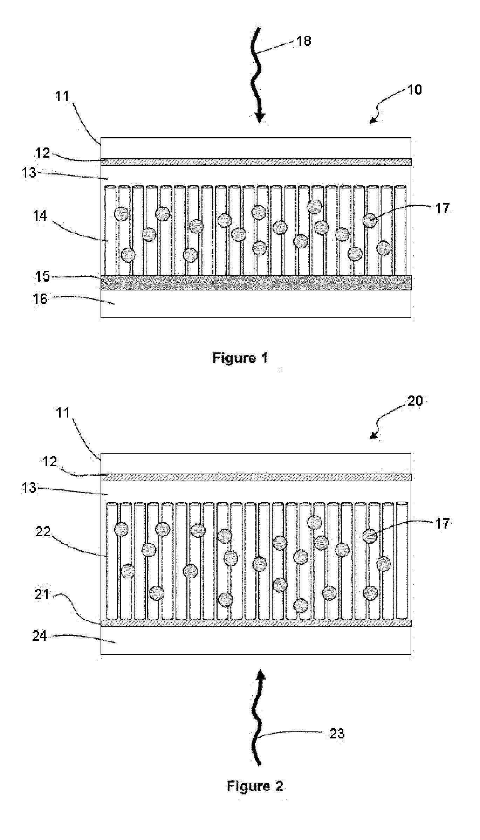

Referring to Figure 1, a dye-sensitized photovoltaic cell 10 comprises a first substrate 16 made of a polymeric material. Preferably, the substrate 16 is flexible. In preferred embodiments, the substrate is made of an imide-based or ester-based polymeric material. In certain embodiments, the first substrate is made of a material selected from the group consisting of: polycarbonate (PC), polyethylene terephthalate (PET), polyether sulfones (PES), polyimide and polytetrafluoroethylene (PTFE) . Selection of the most suitable material may depend on a plurality of factors, including the ability of withstanding the relatively high temperatures of photovoltaic cell manufacturing processes and/or the transparency to incident light. For instance, of the above polymeric materials, PET (transparent) exhibits a glass transition temperature of 70°C, whereas PC (transparent) has a glass transition temperature of 150°C, both values being lower than the temperatures at which nanotube crystallization is induced, as described below in greater detail.

In certain preferred embodiments, the substrate is made of polyimide. For example, the first substrate consists of a Kapton® HN film, manufactured by DuPont™, which withstands relatively high temperatures, e.g. to about 400°C.

Still by way of example, the substrate may be made of 6FDA-DAD polyimide, composed of the following monomers: 4,4'-hexafluoroisopropylene phthalic anhydride and 2,3,5,6 tetramethyl-p-phenylene diamine. Such polyimide withstands temperatures above 350°C and is transparent to visible and near-infrared light.

The first substrate 16 has a top surface, with a titanium metal layer 15 arranged thereon. The titanium layer 15 contacts the top surface of the first substrate and forms the anode of the photovoltaic cell 10. The thickness of the titanium metal layer that forms the anode preferably ranges from 50 to 200 nm.

A nanostructure 14 is formed on the titanium layer 15, preferably in direct contact therewith, and comprises a titanium dioxide ($TiO_2$) nanotube array. In the preferred embodiments, the nanotubes are formed by an anodization process. In one embodiment, the nanostructure 14 essentially consists of a nanotube array.

If nanotubes are formed by an anodization process, they have an approximately cylindrical hollow shape, closed at the bottom. The closed base of nanotubes, which defines the bottom surface of the nanostructure contacts the underlying titanium layer 15. The nanotube array may have a closely packed hexagonal geometry, or a square geometry. The main dimensional parameters that characterize nanotubes are length, internal radius, external radius and wall thickness, derived from the latter two parameters. Preferably, the nanotubes have a crystalline structure.

The structure consisting of a titanium metal layer (unoxidized) with a nanotube array arranged thereon may be formed by deposition of a Ti primary layer directly on the first substrate, followed by an anodization process, in which anodization is not performed throughout the thickness of the Ti primary layer, as explained in greater detail below. It will be appreciated that the presence of a Ti metal layer avoids the need for a conductive layer between the first polymeric substrate 16 and the nanostructure 14, as electric conduction during operation of the photovoltaic cell is ensured by the Ti layer itself, which acts as an anode.

The $TiO_2$ nanotube array at least partially contacts a photosensitive, light-absorbing material 17. The photosensitive material comprises an organic dye, which consists of a photosensitizer molecular complex, e.g. a ruthenium complex. In practice, by having the photosensitive material contact the nanostructure, the inner cavities and the outer surfaces of the nanotubes and the interstices between the nanotubes absorb the photosensitive molecules.

A conductive transparent layer 12 is arranged on the nanostructure 14 to form the cathode of the photovoltaic cell. In certain embodiments, the conductive layer 12 is made of a transparent conductive oxide (TCO), e.g. ITO (indium-tin oxide) or FTO (fluorine doped tin oxide).

Preferably, a second substrate 11, transparent to light, is arranged on the conductive transparent layer 12. Preferably, the second substrate is a flexible substrate made of a transparent polymeric material, e.g. PET.

The gap between the anode 15 and the cathode 12 is filled with a redox electrolyte 13. The redox electrolyte includes a redox couple in a liquid solution or in gel form. In practice, the electrolyte is dispersed between the nanotubes and has the purpose of reducing the molecules after electron injection into $TiO_2$.

The nanostructure, the photosensitive dye and the redox electrolyte form the active photovoltaic layer of the photovoltaic cell.

The Ti layer 15 that acts as an anode is not particularly suitable for direct light radiation, as the latter would cause reflections of a significant portion of the incident light. The photovoltaic cell 10 of Figure 1 is oriented, in operation, such that light impinges upon the side with the cathode of transparent material 12, whereas the first substrate 16 and the anode 15 form the unlighted back side of the cell. The second substrate 11 against which direct light radiation impinges, is made of a transparent material.

In the configuration as shown in Figure 1, the incident light, designated by arrow 18, passes through the second substrate 11 and the conductive layer 12 and hits the dye molecules, that form the photosensitive material 17 of the cell. The dye molecules absorb the photons and reach a photoexcited state, in which pairs of free charge carrier pairs, i.e. electron-hole pairs, are generated. The free charge carrier pairs are separated at the interface between the photosensitive material and the $TiO_2$ nanotubes and, for each pair, an electron is directly "injected" into the conduction band of $TiO_2$, to be carried to the anode, i.e. the unoxidized titanium layer 15. The dye molecule, that has lost the electron, is in an oxidized state that can be neutralized by the molecule of the redox couple in the redox electrolyte 13. Therefore, dye molecules are regenerated by redox couples to reduce oxidation thereof. For example, the redox electrolyte comprises a liquid electrolytic solution consisting of an organic solvent and a redox couple such as $I_3^-/I^-$. The dye molecule that has lost one electron, acquires one electron from iodide thereby oxidizing it into a triiodide ($I_3^-$).

An electric connection external to the cell, not shown in Figure 1, between the anode and the cathode, allows connection of the cell to external loads, which may absorb electric power from the cell when the latter is radiated by light in the spectrum absorbed by the sensitizer molecule, e.g. the visible spectrum if the molecular complex is ruthenium-based. Figure 2 shows a photovoltaic cell of a further embodiment of the present invention. Reference numerals like those of Figure 1 designate equal elements or element having the same functions as those described with reference to Figure 1. In the photovoltaic cell 20, the first substrate 24 of polymeric material, which is preferably flexible, has a conductive layer 21 arranged thereon, to form the anode of the cell. Preferably, the first substrate is made of a transparent material that withstands the crystallization temperatures of the nanotube array. In certain preferred embodiments, the polymeric material of the first substrate is transparent polyimide.

For instance, the first substrate is a colorless (transparent) Kapton® polyimide film, which is being developed by DuPont™ for CdTe-based solar cells.

In one embodiment, the first substrate is made of transparent polyimide 6FDA-DAD. Preferably, the conductive layer 21 is a conductive transparent layer, more preferably a TCO film.

A nanostructure 22 comprising a titanium dioxide nanotube array is formed on the anode 21. Preferably, the nanostructure 22 directly contacts the conductive layer 21. In the preferred embodiments, the nanotubes are formed by an anodization process.

Preferably, the nanostructure is arranged in contact with the conductive layer by means of a bottom surface.

In one embodiment, the nanostructure 22 essentially consists of a nanotube array, and the nanotube array contacts the conductive layer.

The nanotube array may have a closely packed hexagonal geometry, or a square geometry. Preferably, the nanotubes have a crystalline structure. The photovoltaic cell configuration of this embodiment may be obtained by deposition of a Ti layer on the conductive layer that forms the anode, and then by an oxidation process by anodization, in which anodization is performed throughout the thickness of the deposited Ti layer. In other words, the titanium primary layer undergoes a substantially complete anodization.

Preferably, the conductive layer 21 has a sheet resistance ranging from 8 to 20 $\Omega$/.

The active photovoltaic layer comprises the nanostructure 22, the photosensitive material 17 and a redox electrolyte 13. A further conductive layer 12 and a second substrate of polymeric material, such as PET or PC are arranged on the nanotube array 22.

When the photovoltaic cell of figure 2 is formed with a first polymeric substrate 24 transparent to incident light, it can be backlit with incident light impinging on the first substrate 24. The arrow 23 designates the incident light. This operating configuration may be advantageous, in certain embodiments, because light radiation is directly absorbed by the sensitizing molecule without passing through the redox electrolyte, which is often not wholly transparent and hence causes partial light absorption and reduced photoconversion efficiency.

In one embodiment, not shown in the figures, a Ti metal layer is placed between the conductive transparent layer 21 that forms the anode and the nanostructure 22. In this embodiment, light incidence occurs in a configuration like that described with reference to Figure 1.

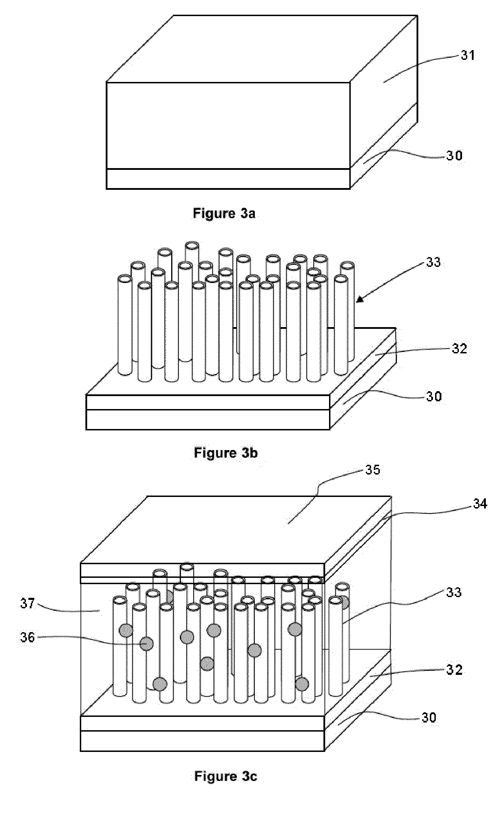

Figures 3a-3c schematically and show a sequence of steps of a photovoltaic cell manufacturing process according to one embodiment of the present invention. The above process is suitable for manufacturing the photovoltaic cell of Figure 1.

Referring to Figure 3a, a titanium primary layer 31 is deposited on a first substrate 30 of polymeric material, such as a film of polyimide or another plastic material having a high glass transition temperature (e.g. higher than about 300°C-350°C). Preferably, the titanium layer is deposited by sputtering, e.g. magnetron sputtering. In certain embodiments, the deposited titanium layer has a thickness that ranges from 1 $\mu$m to 15 $\mu$m.

After deposition, the titanium layer undergoes an anodic oxidation process, also referred in the present descriptione and claims to as anodization, for forming a $TiO_2$ nanotube array. The anodization process (not shown) involves dipping the Ti primary layer deposited on the first substrate into an electrolytic bath. In certain embodiments, the electrolytic bath comprises an organic solvent and a complexing agent containing fluoride ions. The electrolytic bath is contained in a two-electrode electrochemical cell, in which the first electrode is the titanium primary layer and the second layer is a metal sheet, e.g. made of Pt. A voltage is applied between the electrodes. The formation of nanotubes results from a competition between the electrochemical oxidation of titanium at the free surface of the primary layer and the chemical dissolution of the layer by the fluoride ions in the electrolyte. In this embodiment, the anodization of the primary layer is not complete and a titanium residual layer that has not reacted with the electrolyte remains at the end of the process. In other words, the nanotube array does not extend throughout the Ti primary layer, a Ti residual layer remaining underneath the nanotube array. Figure 3b shows the structure after the anodization step. A nanostructure 33 comprising a nanotube array is arranged on and in contact with a titanium residual layer 32. Preferably, the nanostructure 33 essentially consists of a nanotube array. The Ti residual layer 32 is arranged on and in contact with the first substrate 30 of polymeric material and forms the anode of the solar cell. Preferably, the thickness of the Ti residual layer ranges from 50 nm to 200 nm.

It shall be appreciated that the titanium residual layer may also act as a charge carrier, during anodization, to allow anodization of titanium on an insulating polymeric substrate. Partial anodization through the thickness of the primary layer may be obtained by appropriately selecting the anodization time and turning off the voltage/current generator when, possibly depending on the thickness of the primary layer, the desired thickness of the residual layer has been reached.

In the preferred embodiments, the polymeric material of the first substrate is an electrically insulating material.

In one embodiment, the organic solvent of the electrolytic bath comprises glycerol. In certain embodiments, an electrolytic bath containing an organic solvent and fluoride ions may be preferred to an electrolytic bath consisting of an aqueous solution containing hydrofluoric acid. The anodization process is slower in the case of electrolytes containing an organic solvent. Nevertheless, the possible drawback associated with a lower speed of nanotube formation is balanced by the possibility of forming longer nanotubes, due to the less aggressive action of the organic solvent, such as glycerol.

Preferably, after deposition of the titanium primary layer and before the anodization process, the top surface of the primary layer, i.e. the free surface, is covered with a thin protective layer of alcohol-based ink, e.g. by coating the surface of the Ti primary layer with an alcohol ink-based marker pen. The Applicant noted that the presence of a protective layer of alcohol-based ink induces the formation of nanotubes having substantially smooth surfaces, and inhibits the formation of scales and residues, which are generally found in nanotube arrays resulting from anodization processes conducted with no protective cover. Coating of the titanium surface provides a nanotube array with very clean surfaces, that require no cleaning treatment, such as ultrasonic cleaning, after nanotube growth. Without being bound by any particular theory or explanation, ink is supposed to allow alcohol contact with titanium during the anodization process, when the sample is dipped in the electrolytic bath. In this way, during the process, alcohol exerts a solvent effect that causes removal of weekly adhered residues from nanotube surfaces.

Preferably, the protective layer has a thickness that ranges from 200 nm to 1 $\mu$m.

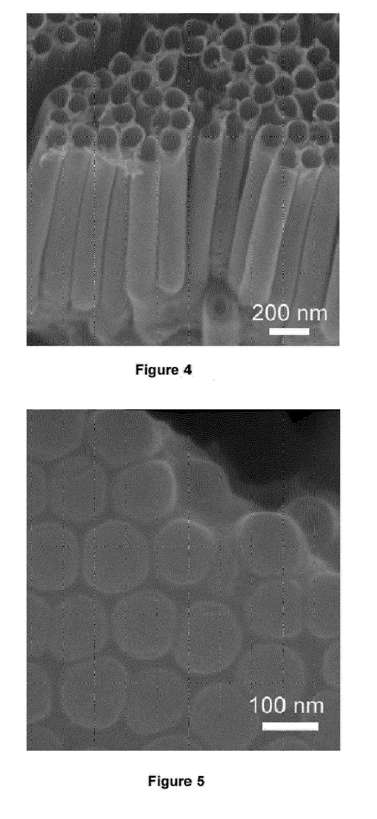

Figure 4 is an image obtained by a Scanning Electron Microscope (SEM) of a nanotube array obtained from the anodization process. The openings of nanotube cavities are visible in Figure 4, which is a side view. The nanotubes are about 2 $\mu$m long. Figure 5 is a SEM image of a bottom plan view of the nanotube array of Figure 4, after separation of the nanotubes from the substrate, in which the nanotubes are shown to be closed at their base.

The nanotubes are arranged with a substantially vertical orientation relative to the top surface of the first substrate.

After selection of the electrolytic bath, the length, internal and external radius and vertical wall thickness of nanotubes may be set, by appropriately selecting at least one of the parameters that characterize the anodization process, such as the voltage to be applied, current density, anodization time and concentration of the complexing agent that dissolves $TiO_2$ (e.g., HF or $NH_4F$).

Preferably, the nanotubes are 2 to 40 $\mu$m long. Length is intended as the length of nanotube sidewalls.

Preferably, the sidewall thickness, which is defined as the difference between the external radius and the internal radius, ranges from 5 nm to 25 nm.

Preferably, the external radius of nanotubes ranges from 10 nm to 150 nm, more preferably from 20 nm to 40 nm.

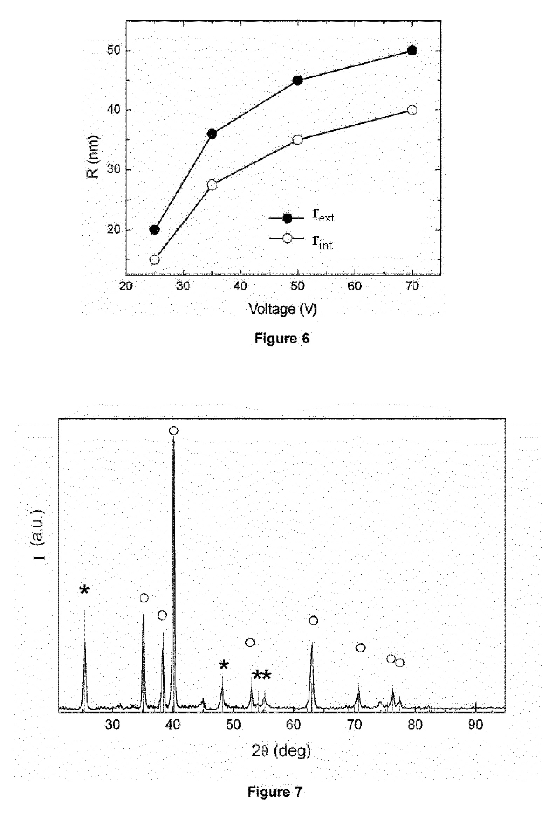

Figure 6 is a chart that shows the external radius, $r_{ext}$, (full circles) and the internal radius, $r_{int}$, (empty circles), as measured on SEM images, of nanotube arrays as a function of the anodization voltage applied during the anodization process, with an electrochemical bath of 0.5-1 wt.% NH$_4$F (ammonium fluoride) and 1-5 mol L$^{-1}$ H$_2$O. Anodization was conducted on a 5 $\mu$m Ti primary layer, deposited on polyimide (Kapton® HN). Figure 6 shows that both the external radius and the internal radius increase as the applied voltage increases. By changing the applied voltage, the internal radius may change over a wide range of values, e.g. from 10 nm to 150 nm. The lateral thickness of the sidewall slightly increases as the tube radius increases, whereas the specific surface of the nanotube (defined as the surface by unit volume) decreases as the radius increases. In certain embodiments, use is preferably made of nanotubes having a relatively small external radius, preferably ranging from 20 nm to 40 nm, as the increased specific surface affords a greater load of photosensitive dye.

The nanotube array obtained from the anodization process has an amorphous structure. After the anodization process, nanotube crystallization is conducted by heating the nanotube array to a temperature above 200-250°C, e.g. ranging from 300°C to 400°C. The heating temperature may be selected according to the polymeric material of which the first substrate is made, and particularly according to the glass transition temperature of such polymeric material.

The heating process induces crystallization of the nanotubes and of the Ti metal that forms the residual layer. Preferably, the heating process conditions are selected to provide an anatase crystal structure in nanotubes. For example, the structure is heated for at least 3 hours, e.g. from 3 to 5 hours, to a temperature of 350°C at ambient atmosphere.

Figure 7 is an X-ray diffraction pattern (XRD) of a sample that consists of a structure formed of a Kapton® HN substrate, having a titanium primary layer deposited thereon, which is anodized with incomplete anodization, and then heated to 350°C for 5 hours in ambient atmosphere. XRD measurements on the sample, after the anodization process and before the heating process, not shown, exhibit no diffraction peak that might be associated with crystalline TiO$_2$. The pattern of Figure 7, which concerns the sample after the heating process, shows diffraction peaks that are designated by symbols, i.e. empty circles and stars. Peaks indicated with stars designate the anatase crystal phase of TiO$_2$, whereas the empty circles are relative to crystalline titanium metal. The titanium metal signal is generated by the Ti residual layer between the polymeric substrate and the nanotube array. From X-ray diffraction measures taken by a two-dimensional detector, XRD$^2$ (not shown), the Applicant noted that the TiO$_2$ nanostructure created by anodization of a Ti primary layer directly formed on a polymeric substrate has no preferential direction of the TiO$_2$ phase. In other words, nanotubes are crystallized with crystalline domains having mutual random orientations.

After the crystallization step, the nanostructure is exposed to a photosensitive material which comprises an organic dye, consisting of a photosensitizer molecular complex. Such exposition to the photosensitive material, which is absorbed by the nanotube surfaces and by the interstices therebetween, may be obtained by dipping the sample into a solution containing the organic dye, according to well-known methods.

At a later step, a transparent conductive layer is arranged on the TiO$_2$ nanostructure. The transparent conductive layer that forms the cathode of the solar cell is preferably formed on a second substrate of transparent material. In certain preferred embodiments, a TCO layer is grown on a substrate of transparent polymeric material, before placing the latter on the nanostructure.

Then, the gap between the TCO layer and the titanium residual layer is filled with a redox electrolyte. Figure 3c shows the structure of the finished solar cell, which comprises the organic dye 36 absorbed by the nanostructure, and a TCO layer 34 arranged on the nanotube array 33. In certain embodiments, the TCO layer is arranged on a second substrate 35, preferably made of a polymeric material, and the second substrate with the TCO layer is arranged on the nanostructure 33. The gap between the cathode 34 and the anode 32 is filled with a redox electrolyte 37.

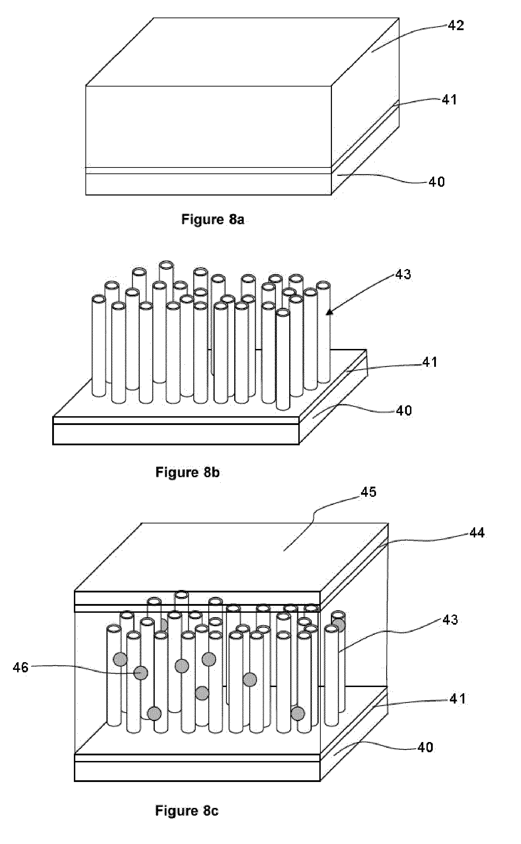

Figures 8a-8c sequentially show some steps of a photovoltaic cell manufacturing process according to one embodiment of the present invention. The above process is suitable for manufacturing the photovoltaic cell of Figure 2.

Referring to Figure 8a, a transparent conductive layer 41, preferably a TCO layer, is deposited on a substrate 40 of transparent polymeric material, such as a film of transparent polyimide having a glass transition temperature above 300°C. The TCO layer may be deposited to obtain a solar cell with a transparent photoanode, after complete anodization of the titanium primary layer 42. Preferably, the thickness of the TCO layer ranges from 50 to 200 nm.

A titanium primary layer 42 is deposited on the TCO layer 41. Preferably, the titanium layer is deposited by sputtering, e.g. magnetron sputtering. In certain embodiments, the deposited titanium layer has a thickness that ranges from 1 $\mu$m to 15 $\mu$m.

After deposition, the titanium layer undergoes an anodization process, for forming a TiO$_2$ nanotube array. The anodization process involves dipping the Ti primary layer deposited on the first substrate into an electrolytic bath. Preferably, in this embodiment, anodization of the primary layer is complete and substantially the entire Ti primary layer has reacted with the electrolyte. In other words, the nanotube array extend throughout the thickness of the Ti primary layer. Figure 8b shows the structure after the anodization step: a nanostructure 43 comprising a nanotube array is arranged on and in contact with the transparent conductive layer. In certain preferred embodiments, the nanostructure 43 essentially consists of a nanotube array. Complete anodization is achieved, for instance, by appropriately selecting the anodization time. In this case, the anodization speed shall be preferably monitored, to prevent anodization of the nanotube layer at the end of the complete anodization of the titanium primary layer, and hence to prevent partial nanotube dissolution.

The next process steps are similar to those described with reference to Figure 3c. The structure of the resulting solar cell is shown in Figure 8c. Particularly, after exposure of the nanostructure comprising the nanotube array to a photosensitive material 46 (e.g. organic dye), a second conductive layer 44, which acts as a cathode for the solar cell, is arranged on the nanostructure. In certain embodiments, the second conductive layer 44, preferably transparent, is formed on a second substrate of polymeric material 45, preferably transparent. Preferably, a TCO layer is deposited on a substrate of transparent polymeric material, such as PET.

The second substrate 45, with the conductive layer 44 thereon, is arranged on the nanostructure. The gap between the anode (i.e. the first conductive transparent substrate 41) and the cathode (the second conductive transparent substrate 44) is filled with a redox electrolyte 47.

A parameter that characterizes the nanotube array is the roughness factor, RF, which is defined as the total surface area available for impregnation with the dye molecule, per unit area of the sample. In the case of a closely packed hexagonal geometry of the nanotube array, the roughness factor is given by:

$$RF = 2\pi L/D. \qquad (1)$$

In the case of a square geometry of the nanotube array, the roughness factor is given by:

$$RF = \pi L/(3^{0.5}D). \qquad (2)$$

In the relations (1) and (2), L is the average length of nanotubes and $D = 2r_{ext}$, $r_{ext}$ being the average external radius of nanotuubes, is the average diameter of nanotubes.

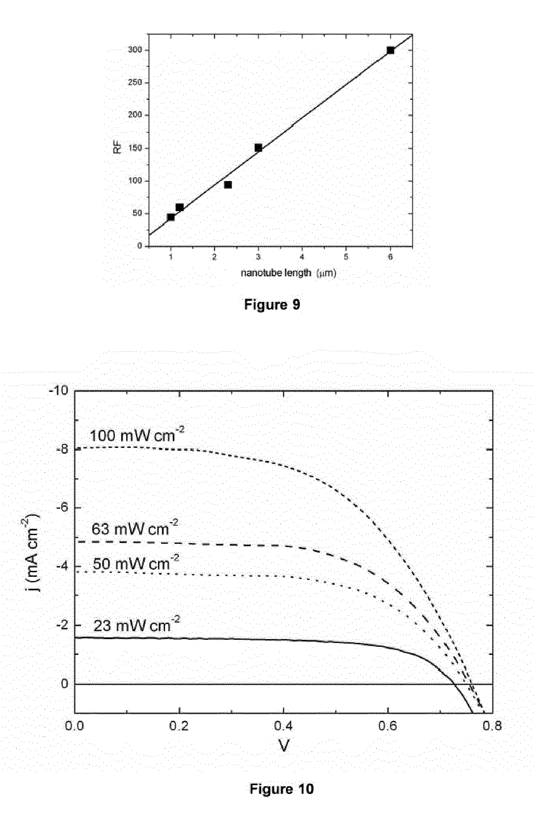

Figure 9 is a chart that shows the roughness factor (RF) obtained from the analysis of SEM images of a nanotube array having an external radius of 30 nm as a function of the nanotube length. A substantially linear dependence is found between the RF values and nanotube length.

Preferably, the roughness factor ranges from 100 nm to 2000, corresponding to a nanotube length range from 2 to 40 nm.

Roughness factors of less than about 250 were found to ensure an adequate photosensitive dye load on the nanotube array and a sufficient optical density for full absorption of the incident solar radiation in the dye spectral range by the active photovoltaic layer.

Example

A titanium layer was formed on a substrate consisting of a Kapton®NH sheet, sold by Dupont, by room temperature DC magnetron sputtering. The thickness of the substrate was about 250 $\mu$m.

During deposition, an argon gas was used at a pressure of $4 \times 10^{-3}$ mbar and a power density of 2.5 W/cm$^2$. The deposition rate was 1.5 $\mu$m/hour. The resulting film showed no crack and was 4 $\mu$m thick. The film did not tend to peel off the substrate upon moderate bending of the first substrate or a heating process to 350°C.

Titanium layers were anodized at room temperature in an electrochemical cell.

Prior to anodization, the Ti layer was covered with a thin layer, of about 400 nm, of an ethanol-based ink using an ethanol-based Stabilo OHPen felt-tip pen. Anodization was conducted using a power supply ((Delta Elektronika SM 300-5, Netherlands) in a two-electrode cell in potentiostatic conditions, i.e. at constant voltage. A platinum sheet was used as a counter-electrode. The electrolytic solution was a glycerol solution of 0.5-1 wt.% NH$_4$F (ammonium fluoride) and 1-5 mol L$^{-1}$ H$_2$O. The voltage applied between the sample and the Pt cathode was 50 V and the anodization time was about 160 minutes. The titanium residual layer was 200 nm thick.

The nanotubes were 6 $\mu$m long and had an amorphous structure.

After anodization, the samples underwent a heating process in the ambient atmosphere to 350°C for 5 hours to induce crystallization of amorphous crystals. Then, the samples were washed with distilled water and dried at room temperature.

The nanotubes were dye-sensitized by 20-hour impregnation in a solution having a 0.5 mM ethanol concentration, and containing a ruthenium-based molecule N719 (manufactured by Solaronix). The unabasorbed dye was removed by ethanol washing. Dye absorption in the structure was quantitatively determined using the US-Vis spectrophotometric method, after a calibration that used diluted aqueous solutions of N719.

The absorbed dye was completely removed from the top surface of the nanotube structure, i.e. the surface opposite to the first substrate, by washing with an aqueous solution containing 0.1 M NaOH. UV-Vis measures were obtained in quartz optical cells, having an optical path of 1 cm, using a double-beam spectrophotometer series T80 by PG Instrument Ltd.

The solar cell is based on the redox potential of the redox couple $I_3^-/I^-$ (triiodide/iodide) using a low-viscosity electrolyte with 50 mM triioide in acetonitrile (Iodolyte AN-50 by Solaronix). The active area of the solar cell was $5 \times 5$ mm$^2$. The counter-electrode was a PET sheet covered with a 200 nm TCO layer and having a sheet resistance of 10 $\Omega$/. A 5 nm Pt film was deposited on the TCO layer before arranging the counterelectrode on the nanostructure.

The functional properties of solar cells were investigated by simulating standard insolation conditions (100 mW/cm$^2$ with an AM1.5G spectrum) using a solar simulator ABET 2000.

Figure 10 shows experimental current density (j) - voltage (V) curves for different intensities of simulated solar radiation, i.e. 23, 50, 63 and 100 mW/cm$^2$.

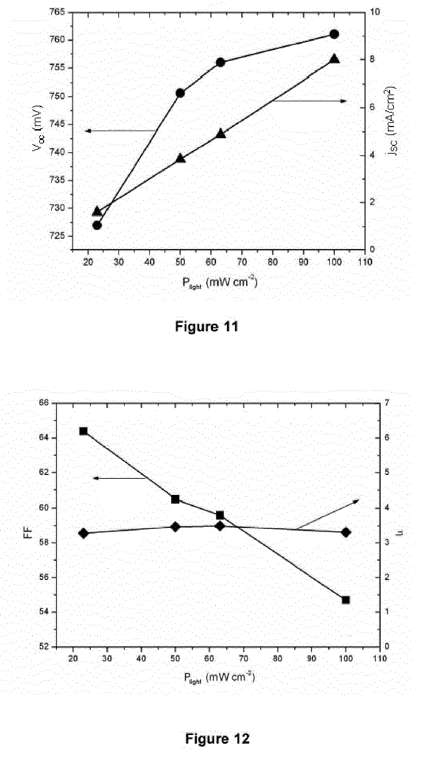

Figure 11 is a chart that shows, in the left y-axis, the open-circuit voltage ($V_{oc}$) and in the right y-axis the short-circuit current density ($j_{SC}$) of the solar cell, as a function of the simulated solar-radiation intensity (experimental values of Figure 10). The short-circuit current exhibits a linear dependence on incident light intensity, whereas the short-circuit voltage has a sublinear curve, which would be typical for a molecule-sensitized cell.

Figure 12 is a chart that shows, in the left y-axis, the fill factor (FF) and in the right y-axis the efficiency ($\eta$) of the solar cell, as a function of the simulated solar-radiation intensity (experimental data of Figure 10). Conversion efficiency was measured and found to be substantially independent of light intensity and equal to about 3.5%.

**Claims**

1. A dye-sensitized photovoltaic cell, comprising:

   a first substrate of polymeric material having a top surface;
   an anode arranged on the first substrate;
   an active photovoltaic layer arranged on the anode, which comprises a nanostructure including an arrangement of titanium dioxide nanotubes, a photosensitive material in contact with the nanostructure and a redox electrolyte, and
   a cathode arranged on the active photovoltaic layer, wherein the redox electrolyte is placed between the anode and the cathode.

2. The cell of claim 1, further comprising a second substrate arranged on the cathode and made of polymeric material.

3. The cell of claim 2, wherein the second substrate is made of transparent polymeric material.

4. The cell of any of the preceding claims, wherein the cathode comprises a layer of transparent conductive material.

5. The cell of any of the preceding claims, wherein the first substrate is made of an imide-based or ester-based polymeric material.

6. The cell of any of the preceding claims, wherein the anode comprises a titanium residual layer which is directly formed on the top surface of the first substrate and the nanostructure including an arrangement of titanium dioxide nanotubes is placed on and in contact with the titanium residual layer.

7. The cell of claim 6, wherein the titanium residual layer has a thickness of from 50 nm to 200 nm.

8. The cell of any of claims from 1 to 5, wherein the anode comprises a layer of transparent conductive oxide.

9. The cell of claim 8, wherein the nanostructure contacts the layer of transparent conductive oxide.

10. A process of manufacturing a dye-sensitized photovoltaic cell, which comprises:

providing a first substrate of polymeric material having a top surface;

forming a titanium primary layer on the first substrate;

oxidizing the primary titanium layer to form a nanostructure comprising an arrangement of titanium dioxide nanotubes, the nanostructure being arranged on a first conductive layer;

exposing the nanostructure to contact with a photosensitive material;

placing a second conductive layer on the nanostructure, and

placing a redox electrolyte between the first conductive layer and the second conductive layer.

11. The process of claim 10, in which oxidizing is carried out by an anodic oxidation process.

12. The process of claim 10 or 11, wherein the primary layer has a surface, the process further comprising, after depositing the primary layer and prior to oxidizing the primary layer, covering the surface of the primary layer with a protective layer comprising an alcohol-based ink.

13. The process of any of claims from 10 to 12, which further comprises, after oxidizing the primary layer and prior to exposing the nanostructure to a photosensitive material, crystallizing the nanostructure.

14. A process as claimed in any of claims from 10 to 13, wherein

forming a primary layer comprises forming a titanium primary layer directly on the top surface of the first substrate, where the primary layer has a thickness, and oxidizing comprises partially oxidizing the titanium primary layer through a first thickness portion to form a nanostructure lying on a residual non-oxidized titanium layer that forms the first conductive layer and extends along a second thickness portion lying under the first portion, the nanostructure comprising an arrangement of titanium dioxide nanotubes, and the titanium residual layer being interposed between the first substrate and the nanostructure.

15. The process of claim 14, wherein forming a titanium primary layer comprises depositing a titanium primary layer on the top surface of the first substrate by sputtering deposition.

16. The process of claim 14 or 15, wherein oxidizing is carried out by an anodic oxidation process, which comprises dipping the titanium primary layer deposited on the first substrate into an electrolytic bath which comprises an organic solvent and a complexing agent containing fluoride ions, and providing a potential difference between a first and a second electrode, in which the first electrode is the titanium primary layer.

**Figure 1**

**Figure 2**

Figure 3a

Figure 3b

Figure 3c

Figure 4

Figure 5

Figure 6

Figure 7

42

41

40

**Figure 8a**

43

41

40

**Figure 8b**

45

44

43

46

41

40

**Figure 8c**

**Figure 9**

**Figure 10**

Figure 11

Figure 12

Europäisches
Patentamt

European
Patent Office

Office européen
des brevets

# EUROPEAN SEARCH REPORT

Application Number

EP 12 17 3177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | MOR G K ET AL: "A review on highly ordered, vertically oriented TiO2 nanotube arrays: Fabrication, material properties, and solar energy applications", SOLAR ENERGY MATERIALS AND SOLAR CELLS, ELSEVIER SCIENCE PUBLISHERS, AMSTERDAM, NL, vol. 90, no. 14, 6 September 2006 (2006-09-06), pages 2011-2075, XP028002102, ISSN: 0927-0248, DOI: 10.1016/J.SOLMAT.2006.04.007 [retrieved on 2006-09-06] * page 2058 - page 2063; figure 38 * | 1-16 | INV. H01G9/20 |
| Y,D | OOMMAN K. VARGHESE ET AL: "Long vertically aligned titania nanotubes on transparent conducting oxide for highly efficient solar cells", NATURE NANOTECHNOLOGY, vol. 4, no. 9, 16 August 2009 (2009-08-16), pages 592-597, XP055021072, ISSN: 1748-3387, DOI: 10.1038/nnano.2009.226 * the whole document * | 1-16 | |
| Y | US 2010/269894 A1 (MISRA MANORANJAN [US] ET AL) 28 October 2010 (2010-10-28) * the whole document * | 1-16 | TECHNICAL FIELDS SEARCHED (IPC)<br>H01G |
| Y | US 2009/183994 A1 (MISRA MANORANJAN [US] ET AL) 23 July 2009 (2009-07-23) * paragraph [0074] * | 1-16 | |
| Y | US 2011/127167 A1 (MISRA MANORANJAN [US] ET AL) 2 June 2011 (2011-06-02) * paragraph [0062] * | 1-16 | |

-/--

The present search report has been drawn up for all claims

| Place of search | Date of completion of the search | Examiner |
|---|---|---|
| The Hague | 30 August 2012 | Wolfbauer, Georg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 12 17 3177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | VARDAN GALSTYAN ET AL: "Vertically Aligned TiO2 Nanotubes on Plastic Substrates for Flexible Solar Cells", SMALL, vol. 7, no. 17, 27 July 2011 (2011-07-27), pages 2437-2442, XP055021059, DOI: 10.1002/smll.201101356 * the whole document * | | |
| T | A. VOMIERO ET AL: "Flexible dye sensitized solar cells using TiO2 nanotubes", ENERGY & ENVIRONMENTAL SCIENCE, vol. 4, no. 9, 29 June 2011 (2011-06-29), page 3408, XP055021060, ISSN: 1754-5692, DOI: 10.1039/c0ee00485e * the whole document * | | |

TECHNICAL FIELDS
SEARCHED      (IPC)

The present search report has been drawn up for all claims

| Place of search | Date of completion of the search | Examiner |
|---|---|---|
| The Hague | 30 August 2012 | Wolfbauer, Georg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 3177

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2012

| Patent document cited in search report | | Publication date | Patent family member(s) | | Publication date |
|---|---|---|---|---|---|
| US 2010269894 | A1 | 28-10-2010 | NONE | | |
| US 2009183994 | A1 | 23-07-2009 | CA | 2621995 A1 | 25-10-2007 |
| | | | EP | 1943374 A2 | 16-07-2008 |
| | | | JP | 2009507752 A | 26-02-2009 |
| | | | US | 2009183994 A1 | 23-07-2009 |
| | | | US | 2012160695 A1 | 28-06-2012 |
| | | | WO | 2007120176 A2 | 25-10-2007 |
| US 2011127167 | A1 | 02-06-2011 | CA | 2633531 A1 | 22-05-2008 |
| | | | EP | 1972003 A2 | 24-09-2008 |
| | | | JP | 2009519204 A | 14-05-2009 |
| | | | US | 2011127167 A1 | 02-06-2011 |
| | | | WO | 2008060293 A2 | 22-05-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YONXIANG LI et al.** Fabrication of TiO2 Nanotubes Thin Films and Their Gas Sensing Properties. *Journal of Sensors,* 2009, vol. 2009
- **YUXIN TANG et al.** Preparation and Characterization of TiO2 Nanotube Arrays via Anodization of Titanium Films Deposited on FTO Conducting Glass at Room Temperature. *Acta Physico-Chimica Sinica,* vol. 24 (12), 2191-2197
- **G.K. MOR et al.** A review on highly ordered, vertically oriented TiO2 nanotube arrays: Fabrication, material properties, and solar energy applications. *Solar Energy and Materials & Solar Cells,* 2006, vol. 90, 2011-2075

- **O.K. VARGHESE et al.** Long vertically aligned titania nanotubes on transparent conducting oxide for highly efficient solar cells. *Nature Nanotechnology,* 2009, vol. 4, 592-597
- **M. DÜRR et al.** Low-temperature fabrication of dye-sensitized solar cells by transfer of composite porous layers. *Nature Materials,* 2005, vol. 4, 607-611